# EUROPEAN PATENT APPLICATION

(11) **EP 2 746 974 A2**
(43) Date of publication of application: **25.06.2014**
(21) Application number: 13196981.8
(22) Date of filing: 12.12.2013
(51) Int. Cl.: G06F 17/50

(54) **Multi dimensional virtual experimental apparatus and method for nano device design**

(30) Priority: 21.12.2012 KR 20120150554
(71) Applicant: Korea Institute of Science and Technology, Seongbuk-gu Seoul 136-791 (KR)
(72) Inventor: Lee, Kwang Ryeol, Seoul 137-948 (KR); Kim, Byung-Hyun, Seoul 150-073 (KR); Kim, Chansoo, Seoul 139-898 (KR); Kim, Gyu Bong, Seoul 157-015 (KR); Kim, Seungchul, Seoul 136-130 (KR); Lee, Minho, Seoul 136-781 (KR)
(74) Representative: advotec.

(57) **Abstract**

Disclosed is a virtual experimental apparatus and method for a nano device design. The virtual experimental apparatus for a nano device design includes a virtual work piece determining unit for determining a virtual experimental material for a nano device design, a virtual process experimental unit for applying at least one process to the virtual experimental material determined by the virtual work piece determining unit, and a virtual process analyzing unit for analyzing a result of each process applied to the virtual experimental material by the virtual process experimental unit. The virtual process analyzing unit further includes a multi-scale analyzing unit for analyzing the process result in at least one particle level.

## Description

### BACKGROUND

### 1. Field

The present disclosure relates to a multi dimensional virtual experimental apparatus and method for a nano device design. More particularly, the present disclosure relates to a virtual experimental apparatus and method for a nano device design, which analyzes constituent elements of various sizes and dimensions.

### 2. Description of the Related Art

A Si-based CMOS device becomes gradually smaller and smaller according to the Moore's Law, up to 50 to 60 nanometers in 2008. However, as the device size decreases to a nanometer level, quantum mechanical characteristics of the device material dominate the device characteristics, and thus it is expected that an existing technology computer-aided design (TCAD) depending on "empirical parameters" cannot easily simulate characteristics of a nano device. Here, the TCAD is a foundation technique for predicting characteristics of a produce based on modeling about semiconductor processes and device phenomenon, and when making a new semiconductor, simulation is performed before being applied to a production line 1) to fine an optimal process or 2) to check properties and features of a semiconductor to be produced. Korean Unexamined Patent Publication No. 2006-0062681 discloses a method for simulating a semiconductor sputtering process using Monte-Carlo simulation but fails to disclose prediction of an atomic/molecular structure. As described above, in order to describe a next-generation nano device, it is urgently needed to develop multilateral computer simulation techniques for obtaining computer simulation results of an electronic level computer simulation based on the quantum mechanics, an atomic level computer simulation based on the classical mechanics, a baryon-based Monte-Carlo computer simulation, a current simulation or the like interpreting characteristics of a device by coupling such results. In addition, there is needed a computer simulation tool of a laboratory form to fill up a gap between a computer simulation and an actual experiment.

### [RELATED LITERATURES]

### Patent Literature

Korean Unexamined Patent Publication No. 2006-0062681

### SUMMARY

The present disclosure is directed to providing a simulation system of a new paradigm to design a nano device and a nano process.

In addition, the present disclosure is directed to providing a nano device designing technique considering all of phenomenon occurring in a macroscopic area and phenomenon occurring in a nano scale.

Further, the present disclosure is directed to providing a nano device designing technique capable of flexibly changing various parameters when designing a nano device.

In one aspect, there is provided a virtual experimental apparatus for a nano device design, which includes: a virtual work piece determining unit for determining a virtual experimental material for a nano device design; a virtual process experimental unit for applying at least one process to the virtual experimental material determined by the virtual work piece determining unit; and a virtual process analyzing unit for analyzing a result of each process applied to the virtual experimental material by the virtual process experimental unit.

According to another embodiment, the virtual process analyzing unit may further include a multi-scale analyzing unit for analyzing the process result in at least one particle level.

According to another embodiment, the multi-scale analyzing unit may analyze the process result in an electronic level based on quantum mechanics calculation, a molecular level for performing classical dynamic calculation by using an inter-atomic potential, and a continuum level.

According to another embodiment, the virtual process experimental unit may further include a process determining unit for determining the kind, number or order of at least one process to be applied to the virtual experimental material.

According to another embodiment, the virtual process experimental unit may further include a process condition determining unit for changing a condition of at least one process to be applied to the virtual experimental material.

According to another embodiment, the virtual work piece determining unit may determine at least one of: material, initial thickness, crystal orientation or initial doping of a wafer substrate in the virtual experimental material, size and location of a simulation domain, and resolution and characteristic of a mesh.

According to another embodiment, the process may be any one of annealing, oxidation, diffusion, deposition, implantation, lithography, etching, chemical mechanical planarization (CMP), atomic layer deposition (ALD), and sputtering.

According to another embodiment, the process condition may be any one of temperature, pressure and impurity control.

According to another embodiment, the virtual process analyzing unit may analyze an electron structure, a current-voltage distribution, an atomic-force microscope (AFM), RDF, and stress.

In another aspect, there is provided a virtual experimental method for a nano device design, which includes: determining a virtual experimental material for a nano device design; applying at least one process to the determined virtual experimental material; and analyzing a result of each process applied to the virtual experimental material.

According to another embodiment, the analyzing of a result of each process may further include analyzing the process result in at least one particle level.

According to another embodiment, the analyzing in at least one particle level may analyze the process result in an electronic level, a molecular level, and a continuum level.

According to another embodiment, the applying of at least one process may further include determining the kind, number or order of at least one process to be applied to the virtual experimental material.

According to another embodiment, the applying of at least one process may further include determining a condition of at least one process to be applied to the virtual experimental material.

According to another embodiment, the determining of the virtual experimental material may further include determining at least one of: material, initial thickness, crystal orientation or initial doping of a wafer substrate in the virtual experimental material, size and location of a simulation domain, and resolution and characteristic of a mesh.

According to another embodiment, the process may be any one of annealing, oxidation, diffusion, deposition, implantation, lithography, etching, chemical mechanical planarization (CMP), atomic layer deposition (ALD), and sputtering.

According to another embodiment, the process condition may be any one of temperature, pressure and impurity control.

According to another embodiment, the determining of the virtual experimental material may further include analyzing an electron structure, a current-voltage distribution, an atomic-force microscope (AFM), RDF, and stress.

According to an embodiment, the present disclosure may give a technique for interpreting device characteristics based on 1) quantum mechanical calculation, 2) atomic level calculation and 3) continuum level calculation, in order to describe a next-generation nano device.

In other words, it is possible to construct a virtual experimental area substantially similar to an actual experimental environment by using molecular dynamics simulation, k-MC simulation, first principle electron structure calculation, and quantum mechanics-based electron transfer calculating technique.

Further, when designing a nano device, the kinds, orders, numbers or conditions of processes may be freely changed, which gives a highly-flexible nano device designing technique.

### BRIEF DESCRIPTION OF THE DRAWINGS

The above and other aspects, features and advantages of the disclosed exemplary embodiments will be more apparent from the following detailed description taken in conjunction with the accompanying drawings in which:
FIG. 1 shows an inner configuration of a virtual experimental apparatus for a nano device design according to an embodiment; and
FIG. 2 is a flowchart for illustrating a virtual experimental method for a nano device design according to an embodiment.

### DETAILED DESCRIPTION

The following detailed description refers to the accompanying drawings which exemplarily show specific embodiments of the present disclosure. These embodiments will be fully described so that a person skilled in the art may implement the present disclosure. It should be understood that various embodiments of the present disclosure are different from each other but need not to exclude each other. For example, specific shapes, structures and features disclosed herein may be applied to another embodiment without departing from the spirit and scope of the present disclosure. In addition, it should also be understood that locations and dispositions of individual components in each embodiment may be changed without departing from the spirit and scope of the present disclosure. Therefore, the following embodiments are not intended to limit the present disclosure, but the scope of the present disclosure is defined only by the appended claims and all equivalents thereof. In the drawings, like reference numerals denote like elements in several embodiments.

A phenomenon occurring in a nano scale is different from that of a macro scale, observation is not allowed during a process, and experimental analysis is very restrictive. For this reason, importance and value of the study using computational science are greatly increasing. In other words, a process should be simulated in an atomic and electronic level, interface and device structures in the corresponding scale should be simulated, and for better understanding, electron transfer characteristics based on the quantum mechanics should also be simulated. For this, a new technique using quantum mechanical reaction simulation, molecular dynamics and Monte-Carlo simulation, quantum mechanical electron transfer theory, large-scaled computational technique, and a multidimensional computational technique using multi-scale scale bridging for such multidimensional computer simulation techniques is needed.

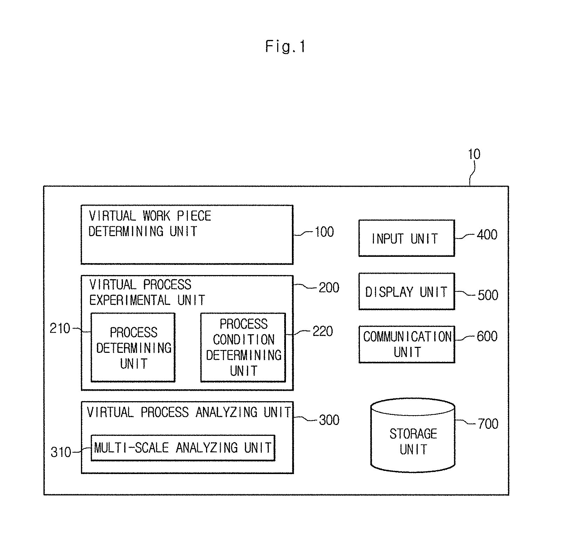

FIG. 1 shows an inner configuration of a virtual experimental apparatus 10 for a nano device design according to an embodiment. The virtual experimental apparatus 10 for a nano device design may include a virtual work piece determining unit 100, a virtual process experimental unit 200, and a virtual process analyzing unit 300. In addition, the virtual experimental apparatus 10 for a nano device design may further include an input unit 400, a display unit 500, a communication unit 600, and a storage unit 700.

The virtual work piece determining unit 100 plays a role of determining a virtual experimental material for a nano device design. In the virtual experimental material for a nano device design, the virtual work piece determining unit 100 may determine material, initial thickness, crystal orientation or initial doping of a wafer substrate. The initial doping may be set as a concentration of atoms per unit volume. In addition, size and location of a simulation domain may be determined. Moreover, resolution and characteristic of a mesh used for expressing a geometric structure may also be determined. The present disclosure is not limited thereto, and any information relating to the virtual experimental material may be set. For example, a circuit board may be made of silicon and have an initial thickness of 0.6 µm and a crystal orientation off <110>. The doping represents an amount of doped boron with a concentration of 10¹⁷ atoms/cm³, and in a simulation domain of (0.0, 0.1, -0.1) x (0.4, 0.5, 1.5), the resolution of the mesh may be set as having a basic level of 0.02 µm in the X-axis direction, 0.01 µm in the Y-axis direction, and 0.05 µm in the Z-axis direction.

The virtual process experimental unit 200 plays a role of applying at least one experimental process to the virtual experimental material determined by the virtual work piece determining unit 100 for computer simulation. In other words, a previously implemented process algorithm is applied to the virtual experimental material to manipulate an actual virtual experimental material. The process algorithm may be stored directly in the virtual process experimental unit or stored in the storage unit 700 to be referred when the virtual process experimental unit 200 operates. In addition, the process algorithm may not be present in the virtual experimental apparatus 10 for a nano device design. By using rapid wire/wireless communication such as Infiniband through the communication unit 600, a process algorithm stored in an external storage unit out of the virtual experimental apparatus 10 for a nano device design may also be referred to.

A process executable by the virtual process experimental unit 200 may include annealing, oxidation, diffusion, deposition, implantation, lithography, etching, chemical mechanical planarization (CMP), atomic layer deposition (ALD), and sputtering. In addition, processes actually used in an experiment may be added.

However, though not stated concretely in the specification, any process for a nano device design may be applied, without any special limitation.

The virtual process experimental unit 200 may further include a process determining unit 210 and a process condition determining unit 220. The process determining unit 210 plays a role of determining the kind, number or order of at least one process to be applied to the virtual experimental material. According to the corresponding process result of the virtual process analyzing unit 300, the kind, number or order of the process may be determined (changed) again in real time after the initial process determination. The virtual process experimental unit 200 determines a process to be applied to the virtual experimental material. Among various processes described above, a process to be applied is determined in consideration of properties of a nano device to be obtained, characteristics of the virtual experimental material or the like. After the kind of the process to be applied is determined, the number of processes may be determined. A single kind of process may be used just once, but according to the content of experiment, the same process may be used several times. In other words, a process may be executed repeatedly. After the kind and number of processes is determined, the order of processes is determined. The same kinds of processes and the same number of processes may give different effects to the virtual experimental material according to a process order. For example, it is determined that three kinds of processes A, B, C are to be applied to the virtual experimental material X, and a process order is determined as B->A->C->A-B->A. In other words, the number of processes is determined as three for the process A, two for the process B, and one for the process C.

The process condition determining unit 220 plays a role of changing a condition of at least one process to be applied to the virtual experimental material of the virtual process analyzing unit 300. According to the process result of the virtual process analyzing unit 300 described later, after an initial process condition is set, the process condition may also be determined (changed) again in real time. The process condition may be one of temperature, pressure and impurity control. For example, in the ultra-shallow junction (USJ) modeling, while changing a doping temperature of boron to silicon, the change of a silicon surface and the change of physical and chemical characteristics of the material such as the transfer of boron may be examined.

The virtual process analyzing unit 300 plays a role of analyzing a result of each process applied to the virtual experimental material by the virtual process experimental unit 200. A virtual analyzing tool capable of analyzing an electron structure, a current-voltage distribution, an atomic-force microscope (AFM) screen, RDF, stress or the like is provided. However, the kinds of analysis are not limited thereto, and various analyzing tools are to be modularized and added. The possibility of modularizing and adding analyzing tools is also a main characteristic of the virtual experimental apparatus. In other words, any analysis capable of understanding characteristics of a nano device and characteristics of a unit process may be used. The analysis may be performed based on molecular dynamics simulation, k-MC simulation, first principle electron structure calculation, quantum mechanics-based electron transfer calculating technique or the like.

The virtual process analyzing unit 300 may further include a multi-scale analyzing unit 310. The multi-scale analyzing unit 310 plays a role of analyzing the process result based on at least one particle level. In other words, the multi-scale analyzing unit 310 analyzes the process result in multi scales. The analysis may be classified into 1) quantum mechanics-based electron transfer analysis, 2) process analysis in an atomic or molecular level and 3) process analysis in a device level. In an embodiment, the quantum mechanics-based electron transfer analysis may analyze a three-dimensional nano electron device based on spin-polarized quantum, charge current and spin current, and calculate a current value of a relevant p-type MOSFET based on quantum mechanics effects in an associated semiconductor device. In addition, it is possible to analyze a current-voltage characteristic at a relevant MOS device. In an embodiment, the process analysis in an atomic or molecular level may perform a process simulation in an atomic or molecular level to which a relevant molecular dynamic calculation is applied, by predicting a normal temperature joint state by means of interaction energy between two atoms or the like. In an embodiment, the process analysis in a device level may generate at least one simulation model according to characteristics of an associated semiconductor.

In the case a natural science or material science field is simulated in multi scales, quantum model analysis handling an electronic level, an electron model analysis handling a molecular level, and a continuum analysis may be conceived. In a semiconductor manufacturing process, for example, a quantum mechanics (QM) analysis for clearly investigating a silicon oxidation process by handling a silicon electronic level, a molecular mechanics (MM) analysis handling a form of a semiconductor composed of silicon oxide based thereon, and a transport analysis of a continuum model for thoroughly studying operation characteristics of the semiconductor may be performed.

The input unit 400 plays a role of receiving various inputs from an experimenter using the virtual experimental apparatus 10 for a nano device design. Inputs for determining a virtual test material, determining the kind, number or order of at least one process to be applied to the virtual experimental material, and determining a process condition, a process time and an analysis method are received from an experimenter. The input unit 400 may be a keyboard, a mouse, a joystick, a touch screen, a digital camera, an optical mark reader (OMR), a bar code reader, or magnetic ink character recognition (MICR). In addition, information transmitted from the outside may be received through a communication unit 600 described later. The input unit 400 may have any shape without limitation as long as it can receive inputs from an experimenter.

The display unit 500 plays a role of displaying a current state of the virtual experimental apparatus 10 for a nano device design. The display unit 500 may display information received by the input unit 400, a process result applied to the virtual experimental material by the virtual process experimental unit 200, and an analysis result of the virtual process analyzing unit 300 to an experimenter. The display unit 500 may be a liquid crystal display (LCD), a plasma display panel (PDP), a projector display, a three-dimensional display using autostereography or hologram such as a shutter glass method, a Lenticular method, and a parallax barrier method, or a touch-screen display capable of recognizing a touch input. The display unit 500 may have any shape without limitation as long as it can display a current state of the virtual experimental apparatus 10 for a nano device design.

The communication unit 600 plays a role of communicating with any object out of the virtual experimental apparatus 10 for a nano device design. The communication method may include all communication methods which allow networking between objects, and is not limited to wire/wireless communication, 3G, 4G, or other methods. All transmittable information including the information received by the input unit 400 of the virtual experimental apparatus 10 for a nano device design, the process result applied to the virtual experimental material by the virtual process experimental unit 200, and the analysis result of the virtual process analyzing unit 300 may be transmitted to an external object. In addition, as described above, the input unit 400 may receive an input from an external object, data from an external DB or the like. The communication unit 600 may perform communication by using at least one communication methods selected from the group consisting of wireless local area network (LAN), a metropolitan area network (MAN), a global system for a mobile network (GSM), an enhanced data GMS environment (EDGE), a high speed downlink packet access (HSDPA), a wideband code division multiple access (W-CDMA), a code division multiple access (CDMA), a time division multiple access (TDMA), Bluetooth, Zigbee, Wi-Fi, VoIP (Voice over Internet Protocol), LTE Advanced, IEEE802.16m, WirelessMAN-Advanced, HSPA+, 3GPP Long Term Evolution (LTE), Mobile WiMAX (IEEE 802.16e), UMB (formerly EV-DO Rev. C), Flash-OFDM, iBurst and MBWA (IEEE 802.20) systems, HIPERMAN, Beam-Division Multiple Access (BDMA), Wi-MAX (World Interoperability for Microwave Access) and ultrasonic communications, without being limited thereto.

The storage unit 700 plays a role of storing data in the virtual experimental apparatus 100 for a nano device design. As described above, the storage unit 700 may store data, algorithm and experiment history data used in the virtual work piece determining unit 100, the virtual process experimental unit 200, and the virtual process analyzing unit 300. The storage unit 700 may be database, storage medium or cloud storage system known in the art, without being limited thereto. According to an embodiment, the virtual work piece determining unit 100, the virtual process experimental unit 200, and the virtual process analyzing unit 300 may have a storage function therein. In another embodiment, the storage unit 700 may be present out of the virtual experimental apparatus 10 for a nano device design.

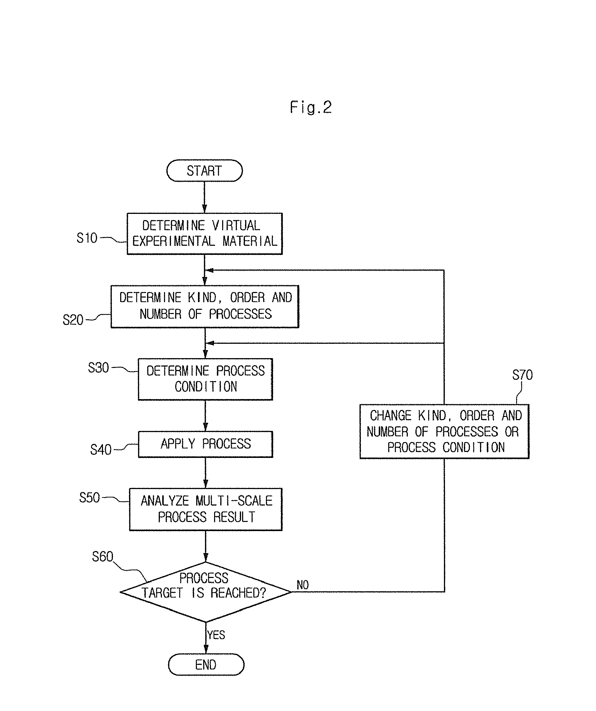

FIG. 2 is a flowchart for illustrating a virtual experimental method for a nano device design according to an embodiment. First, a virtual experimental material is determined (S10). As described above, material, initial thickness, crystal orientation or initial doping of a wafer substrate of the virtual experimental material for a nano device design may be determined. After that, the kind, order and number of processes to be applied to the virtual experimental material are determined (S20). As described above, available processes include annealing, oxidation, diffusion, deposition, implantation, lithography, etching, chemical mechanical planarization (CMP), atomic layer deposition (ALD), and sputtering. However, though not stated above, any process for a nano device design may be used, without being specially limited thereto. After that, a process condition is determined (S30). As described above, temperature, pressure and kind or amount of impurity may be controlled. After that, based on the kind, order and number of processes determined in Step S20 and the process condition determined in Step S30, a process is applied to the virtual experimental material (S40). After the process is applied, a result of each process applied to the virtual experimental material is analyzed. In more detail, the process result is analyzed in multi levels (S50). In the analysis of the process result, as described above, an electron structure, a current-voltage distribution, an atomic-force microscope (AFM) screen, RDF, and stress may be analyzed. If the analyzed process result reaches a process target, the experiment ends (YES in S60). If not (NO in S60), the kind, order and number of processes or the process condition are changed, and then the virtual process experiment is performed again (S70). According to the changed factors, Step S20 or S30 is repeated.

While the exemplary embodiments have been shown and described, it will be understood by those skilled in the art that various changes in form and details may be made thereto without departing from the spirit and scope of the present disclosure as defined by the appended claims. In addition, many modifications can be made to adapt a particular situation or material to the teachings of the present disclosure without departing from the essential scope thereof.

Therefore, it is intended that the present disclosure not be limited to the particular exemplary embodiments disclosed as the best mode contemplated for carrying out the present disclosure, but that the present disclosure will include all embodiments falling within the scope of the appended claims.

## Claims

1. A virtual experimental apparatus for a nano device design, comprising:
a virtual work piece determining unit for determining a virtual experimental material for a nano device design;
a virtual process experimental unit for applying at least one process to the virtual experimental material determined by the virtual work piece determining unit; and
a virtual process analyzing unit for analyzing a result of each process applied to the virtual experimental material by the virtual process experimental unit.

2. The virtual experimental apparatus for a nano device design according to claim 1,
wherein the virtual process analyzing unit further includes a multi-scale analyzing unit for analyzing the process result in at least one particle level.

3. The virtual experimental apparatus for a nano device design according to claim 1 or claim 2,
wherein the multi-scale analyzing unit analyzes the process result in an electronic level based on quantum mechanics calculation, a molecular level for performing classical dynamic calculation by using an inter-atomic potential, and a continuum level.

4. The virtual experimental apparatus for a nano device design according to one of claims 1 to 3,
wherein the virtual process experimental unit further includes a process determining unit for determining the kind, number or order of at least one process to be applied to the virtual experimental material.

5. The virtual experimental apparatus for a nano device design according to one of claims 1 to 4,
wherein the virtual process experimental unit further includes a process condition determining unit for changing a condition of at least one process to be applied to the virtual experimental material.

6. The virtual experimental apparatus for a nano device design according to one of claims 1 to 5, wherein the virtual work piece determining unit determines at least one of:
material, initial thickness, crystal orientation or initial doping of a wafer substrate in the virtual experimental material,
size and location of a simulation domain, and
resolution and characteristic of a mesh.

7. The virtual experimental apparatus for a nano device design according to one of claims 1 to 6,
wherein the process is any one of annealing, oxidation, diffusion, deposition, implantation, lithography, etching, chemical mechanical planarization (CMP), atomic layer deposition (ALD), and sputtering.

8. The virtual experimental apparatus for a nano device design according to claim 5,
wherein the process condition is any one of temperature, pressure and impurity control.

9. The virtual experimental apparatus for a nano device design according to one of claims 1 to 8,
wherein the virtual process analyzing unit analyzes an electron structure, a current-voltage distribution, an atomic-force microscope (AFM), RDF, and stress.

10. A virtual experimental method for a nano device design, comprising:
determining a virtual experimental material for a nano device design;
applying at least one process to the determined virtual experimental material; and
analyzing a result of each process applied to the virtual experimental material.

11. The virtual experimental method for a nano device design according to claim 10, wherein said analyzing of a result of each process further includes:
analyzing the process result in at least one particle level.

12. The virtual experimental method for a nano device design according to claim 11,
wherein said analyzing in at least one particle level analyzes the process result in an electronic level, a molecular level, and a continuum level.

13. The virtual experimental method for a nano device design according to one of claims 10 to 12, wherein said applying of at least one process further includes:
determining the kind, number or order of at least one process to be applied to the virtual experimental material.

14. The virtual experimental method for a nano device design according to one of claims 10 to 13, wherein said applying of at least one process further includes:
determining a condition of at least one process to be applied to the virtual experimental material.

15. The virtual experimental method for a nano device design according to one of claims 10 to 14, wherein said determining of the virtual experimental material further includes determining at least one of:
material, initial thickness, crystal orientation or initial doping of a wafer substrate in the virtual experimental material,
size and location of a simulation domain, and
resolution and characteristic of a mesh.

16. The virtual experimental method for a nano device design according to one of claims 10 to 15,
wherein the process is any one of annealing, oxidation, diffusion, deposition, implantation, lithography, etching, chemical mechanical planarization (CMP), atomic layer deposition (ALD), and sputtering.

17. The virtual experimental method for a nano device design according to claim 14,
wherein the process condition is any one of temperature, pressure and impurity control.

18. The virtual experimental method for a nano device design according to one of claims 10 to 17, wherein said determining of the virtual experimental material further includes:
analyzing an electron structure, a current-voltage distribution, an atomic-force microscope (AFM), RDF, and stress.
